Europäisches Patentamt

(19) European Patent Office

Office européen des brevets

(11) EP 0 506 872 B1

(12) **EUROPEAN PATENT SPECIFICATION**

(45) Date of publication and mention
of the grant of the patent:
**21.08.1996 Bulletin 1996/34**

(21) Application number: **91902821.7**

(22) Date of filing: **11.12.1990**

(51) Int. Cl.$^6$: **B29C 43/20**, B29C 45/02,
B29C 45/16, B29C 49/04,
B29C 49/06, B29C 49/22

(86) International application number:
**PCT/US90/07327**

(87) International publication number:
**WO 91/09719 (11.07.1991 Gazette 1991/15)**

(54) **PROCESSES AND APPARATUS FOR MAKING MULTILAYER PLASTIC ARTICLES**

VERFAHREN UND VORRICHTUNG ZUR HERSTELLUNG VON MEHRSCHICHTIGEN
KUNSTSTOFFGEGENSTÄNDEN

PROCEDES ET APPAREIL DE FABRICATION D'ARTICLES EN PLASTIQUE MULTICOUCHES

(84) Designated Contracting States:
**BE CH DE ES FR GB IT LI NL**

(30) Priority: **26.12.1989 US 456718**

(43) Date of publication of application:
**07.10.1992 Bulletin 1992/41**

(73) Proprietor: **THE DOW CHEMICAL COMPANY**
**Midland, Michigan 48640 (US)**

(72) Inventors:
• **SCHRENK, Walter, J.**
**Midland, MI 48640 (US)**
• **SHASTRI, Ranganath, K.**
**Midland, MI 48640 (US)**

• **ROEHRS, Herbert, C.**
**Beaverton, MI 48612 (US)**
• **AYRES, Ralph, E.**
**Midland, MI 48640 (US)**

(74) Representative: **Raynor, John et al**
**W.H. Beck, Greener & Co**
**7 Stone Buildings**
**Lincoln's Inn**
**London WC2A 3SZ (GB)**

(56) References cited:

| | |
|---|---|
| JP-A-59 091 042 | US-A- 3 239 197 |
| US-A- 3 339 240 | US-A- 3 557 265 |
| US-A- 3 565 985 | US-A- 3 716 612 |
| US-A- 3 817 675 | US-A- 3 884 606 |
| US-A- 4 315 724 | US-A- 4 978 493 |

EP 0 506 872 B1

**Description**

The present invention relates to multilayer plastic articles and to processes and apparatus for making such articles. It has been appreciated previously that articles comprising overlapping layers of diverse thermoplastic materials could realize a combination of properties which could not be realized otherwise, except by the synthesis of an entirely new material or the use of a prohibitively expensive existing material. A number of processes and apparatus have accordingly been developed or suggested for making moldable, three-dimensional multilayer plastic articles of this type.

Exemplary of these known processes and apparatus are those disclosed in United States Patents No. 4,525,134 to McHenry et al., 3,339,240 to Corbett, 4,410,482 to Subramanian, and 3,716,612 to Schrenk et al, and in European Application 0278403 (Mitsubishi Gas Chemical Company Inc.).

Each of these known processes and apparatus, however, possess some limitation with respect to complexity, materials limitations, limitations on the number or arrangement of layers, limitations on the shapes of articles which can be made thereby, and so forth. None of these known processes and methods, additionally, are disclosed or suggested to be suitable for use with multicavity injection molding or in the context of a multicavity injection molding process, or more particularly for multicavity injection molding wherein differing mold geometries are involved.

The processes and apparatus of the present invention are not so limited, however. The moldable articles of the present invention comprise discrete and substantially continuous layers of a plurality of diverse thermoplastic materials, and can be produced with a substantial uniformity of composition in a multicavity injection molding process, even where differing mold geometries are involved and where one of the materials is present only as a minor component (less than about 15 percent by volume). These layers may also be prearranged in a selected layer order, which selected layer order will be preserved in the molded article.

The novel and improved processes and apparatus for making such articles begin with the coextrusion of discrete, generally planar layers of first and second diverse thermoplastic materials in a first composite stream. In one set of processes and apparatus, the first composite stream is thereafter formed directly into a desired configuration with certain desirable qualities by some process other than thermoforming, such as by injection molding, injection blow molding, extrusion blow molding, displacement blow molding, compression molding, or transfer molding. In another group of processes and apparatus contemplated by the present invention, the first composite stream is manipulated to form a second composite stream having an increased number of discrete, generally planar layers of the first and second materials compared to the first composite stream, and the layered second composite stream is then formed into a desired configuration, for example by one of the above-mentioned processes.

Fig. 1 is a schematic of an apparatus of the present invention for injection molding multilayer plastic articles.

Fig. 2 is a schematic illustration of the formation of a second composite stream from a first composite stream.

Fig. 3 is an exploded view of an apparatus for forming a second composite stream from a first composite stream as schematically illustrated in Fig. 2.

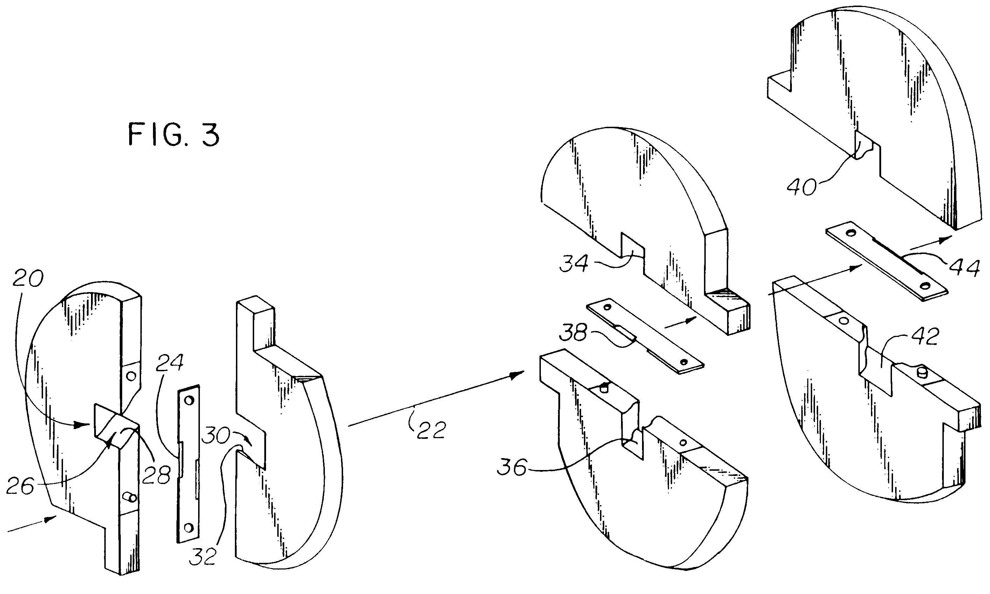

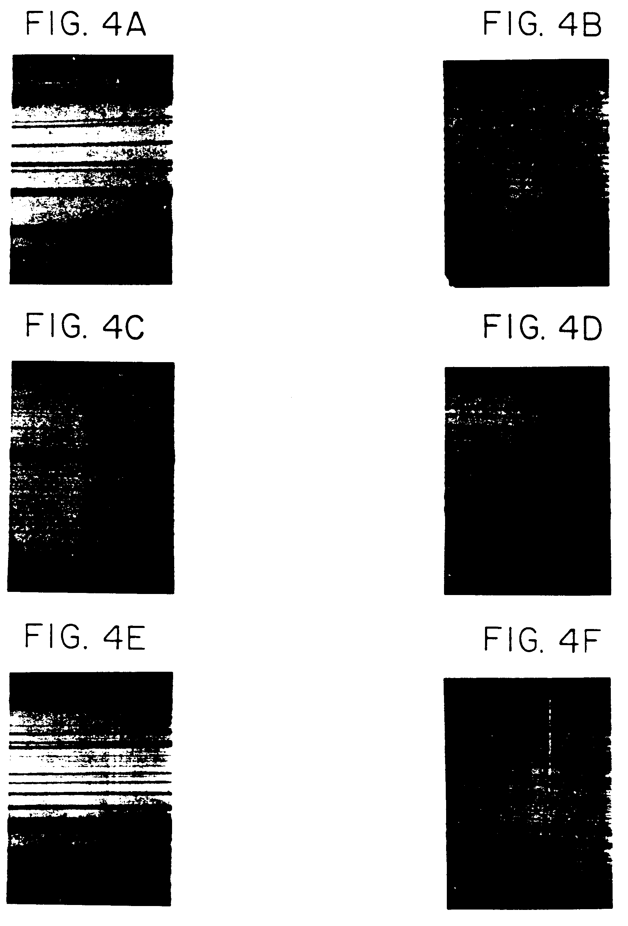

"Figures 4A and 4B are photomicrographs of cross-sections of cans molded from brown and white polypropylene, with the cross-sections being taken near the lip of a respective can and comparing the uniformity of layer thicknesses and evenness of layer distribution which may be achieved by using a commercial Ross interfacial surface generator (Fig. 4A) and the ISG of Fig. 3 (Fig. 4B).

Figures 4C (Ross) and 4D (ISG of Fig. 3) make a similar comparison of cross-sections from the middle of a can.

Figures 4E (Ross) and 4F (ISG of Fig. 3) compare cross-sections near the bottom of a can.

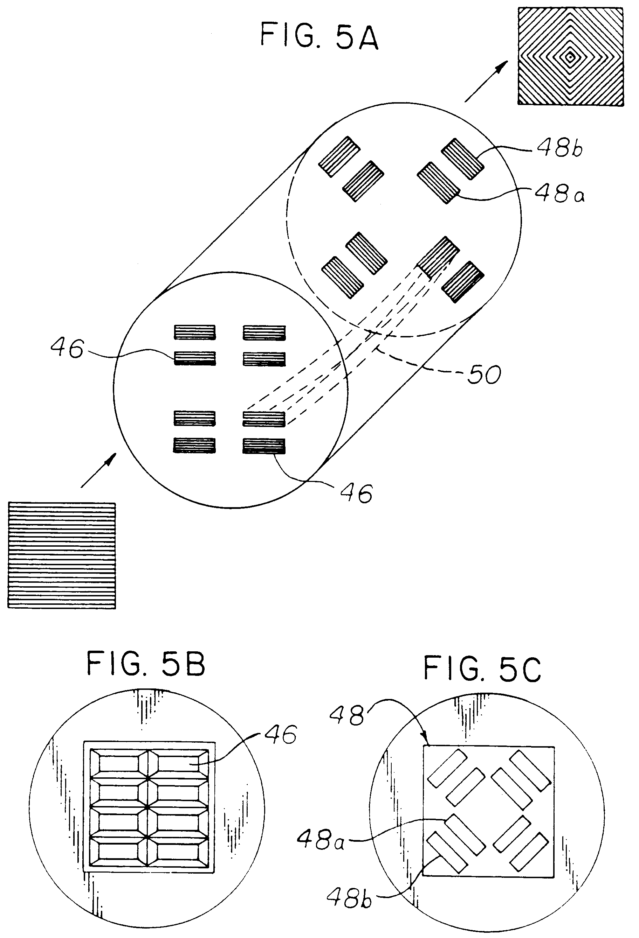

Fig. 5A schematically depicts an apparatus for reducing the exposure of layer edges of a layered stream.

Fig. 5B depicts the inlet side of the apparatus of Fig. 5A.

Fig. 5C depicts the outlet side of the apparatus of Fig. 5A.

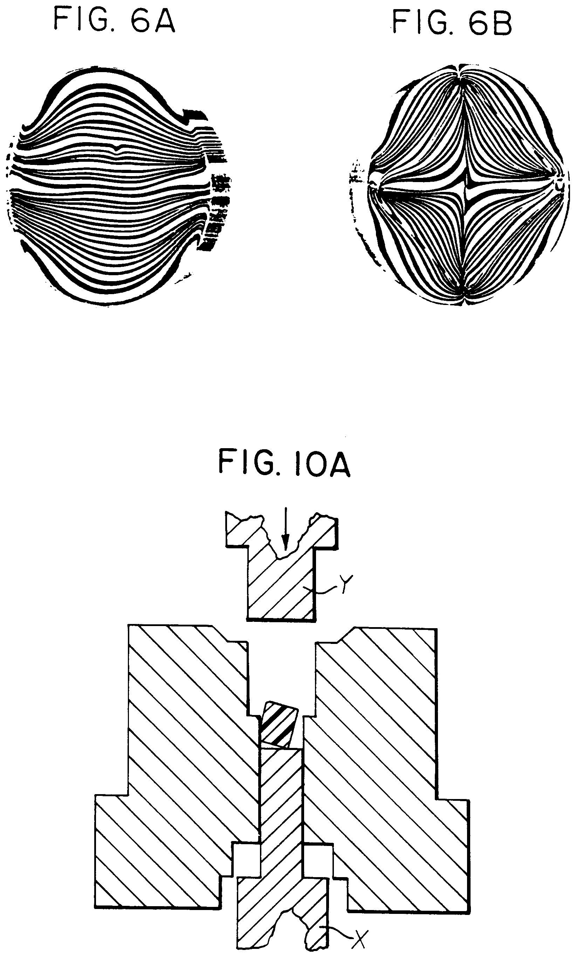

Fig. 6A is a photomicrographic view of a section of a layered melt stream before passing through the apparatus of Fig.'s 5A-C.

Fig. 6B is a photomicrographic view of the section of Fig. 6A, after passing through the apparatus of Fig.'s 5A-C.

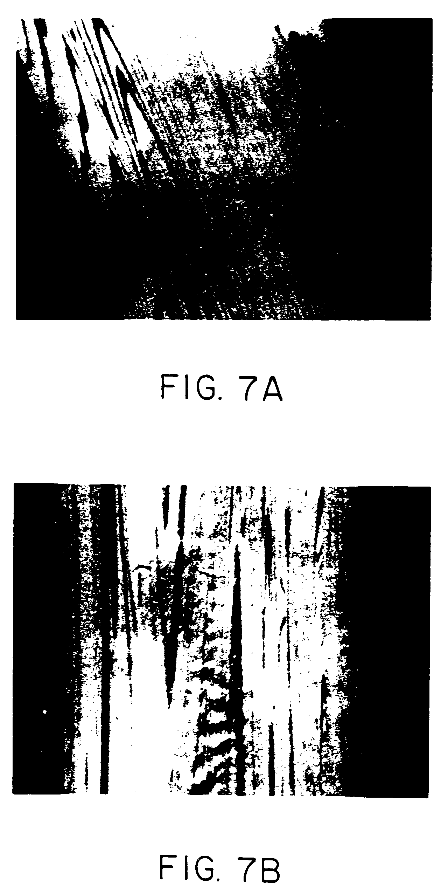

Fig. 7A is a photomicrograph in cross-section of an article produced by transfer molding a melt stream which is as depicted in Fig. 6A.

Fig. 7B is a photomicrograph in cross-section of an article produced by transfer molding a melt stream which is as depicted in Fig. 6B.

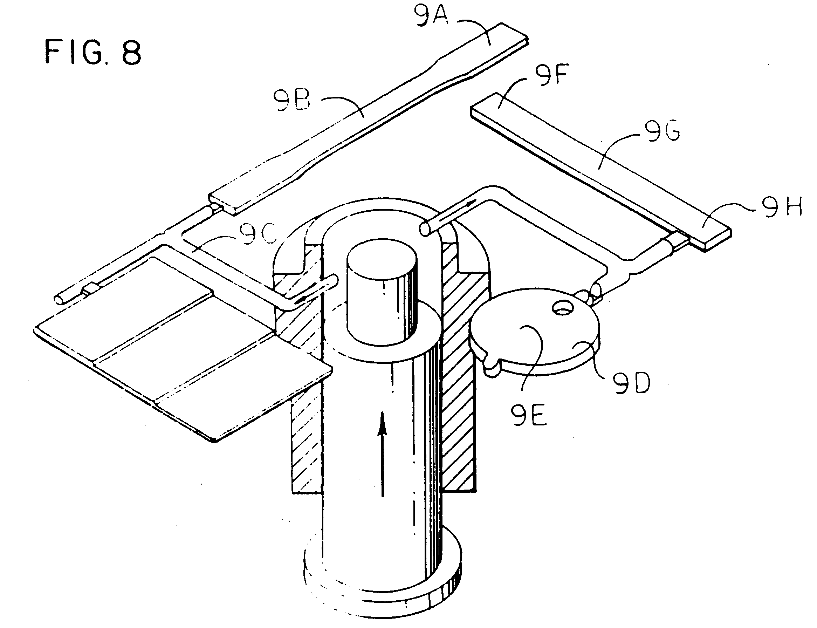

Fig. 8 is a depiction of the location of cross-sectional micrographs taken with respect to transfer molded parts in a simulation of multicavity injection molding.

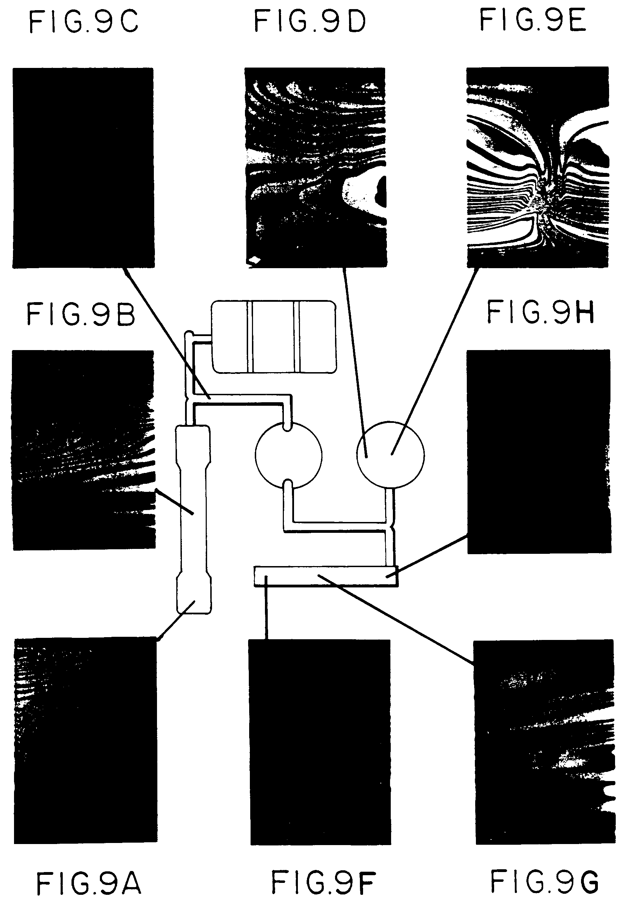

Figures 9A-H presents the series of micrographs whose locations are noted in Fig. 8.

Figures 10A-C shows a transfer molding apparatus as used to demonstrate the present invention.

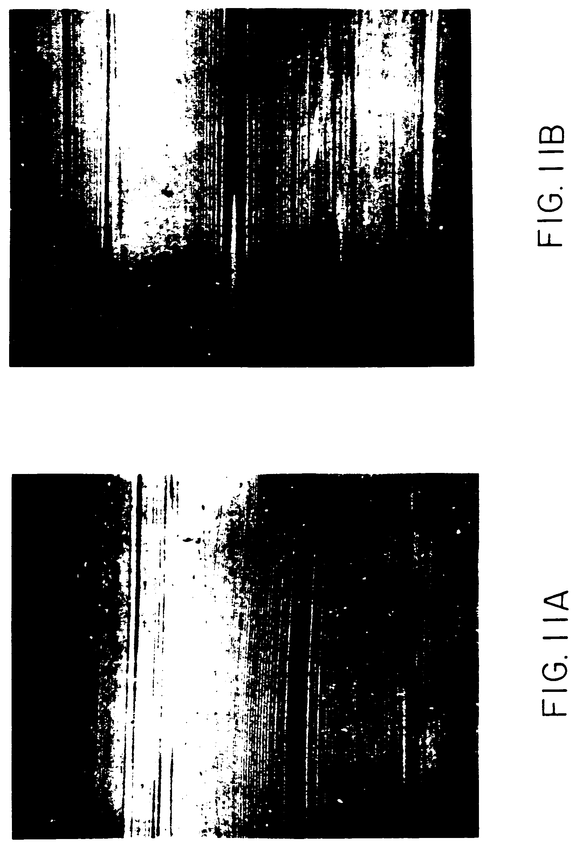

Figures 11A and 11B are cross-sectional photomicrographs taken along orthogonal axes of an article of the present invention constructed as set forth in Example 2 below."

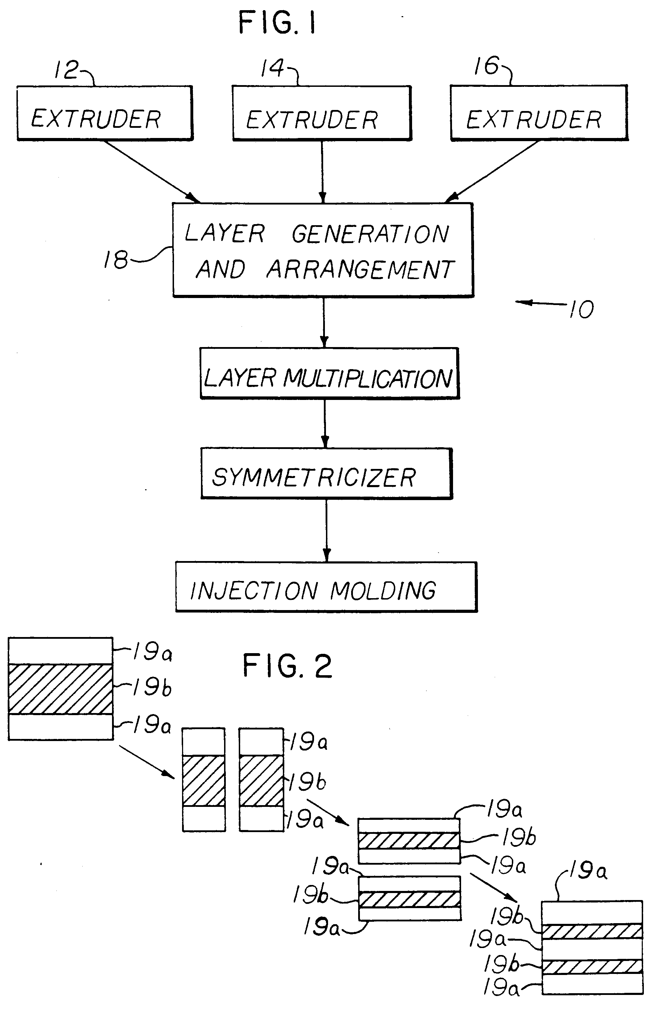

Referring now to Figures 1-11, and more particularly to Fig. 1, an apparatus 10 of the present invention is schematically illustrated. Extruders 12, 14 and 16 of Fig. 1 are sources of first, second and third diverse heat plastified thermoplastic materials, respectively. The depiction of only three extruders as in Fig. 1 does not negate the presence and use of perhaps additional or even fewer extruders or sources of thermoplastic materials, where other or fewer materials are sought to be incorporated into layers of a multilayer article to be formed. Additional materials and layers of materials may be required, for example, where two materials or two at least partially incompatible materials joined by a third compatibilizing material cannot by themselves impart the desired improvement in properties to the articles to be formed.

It should be noted parenthetically that the term "diverse" is intended to suggest only some measurable distinction between such "diverse" materials. This distinction may be of a chemical nature, a physical nature, or in the nature of a difference in color, appearance or optical effect. It is not necessary that one material be, for example, polyethylene while a second, "diverse" material is polypropylene. Nor is it necessary that the materials themselves comprise but a single identifiable species, so that a mixture of polyethylene and polypropylene could comprise a "thermoplastic resinous material" for purposes of this invention, and would be diverse from polyethylene or polypropylene individually.

Means for generating and controllably or non-randomly arranging layers of the first, second and third materials in a first composite stream is schematically depicted in Fig. 1 and comprises in a preferred embodiment a coextrusion feedblock apparatus 18. A preferred coextrusion feedblock apparatus for generating and arranging layers of the first, second and third materials in a first composite stream is as disclosed in United States Patent No. 3,557,265 to Chisholm et al. or as disclosed in United States Patent No. 3,884,606 to Schrenk et al.

The present invention relies upon the arrangement of the extruders and the feedblock apparatus to control the thicknesses, distribution, and arrangement of layers of the various materials to be included in the first composite stream. In this way, it is a relatively simple matter in the context of the teachings of the coextrusion art:

1) to order the layers of the first, second and third materials, for example, within a first composite stream so that the third material may be initially advantageously placed;

2) to distribute the materials substantially evenly in the composite stream so that the distribution of the layers in the finished article will be relatively even also and the article will display a substantial uniformity of composition with respect to at least the layers of property-affecting materials adjacent a critical surface of the article; and/or,

3) to select a layer thickness for layers of each of the various materials so that subsequent manipulations of the emerging composite stream do not cause the layers of the various materials in the ultimately desired configuration to depart from a substantially continuous nature.

By "substantially continuous," it is meant only that the individual layers have significantly more of the character of a continuous layer extending throughout and around the walls or boundaries of an article, and more particularly adjacent a critical surface of the article, than any partial lamellae which would be created in accordance with or suggested by the teachings of the prior art.

A "critical surface" refers to a surface of the article which will be subject to various stresses or wherein the properties which are sought to be enhanced by a lamellar construction will be desired. Where the object is to enhance barrier properties in an article with respect to a particular gas or solvent, for example, a critical surface would correspond to any surface which is expected to contact that gas or solvent and to form a barrier to permeation of the gas or solvent therethrough.

We consider that no more than about 10 percent of these layers of the property-affecting materials of interest should have an interfacial surface area to unit thickness ratio of less than 10:1 to realize the benefits and advantages of our invention, although preferably and typically the dimensions and thicknesses of layers created by the processes of our invention will be such that multilayer articles produced thereby have properties and a cross-sectional microscopic appearance approaching those of a thin, flat coextruded sheet. Thus, the interfacial surface area to unit thickness ratio for layers of the property-affecting materials of interest adjacent a critical surface of an article will preferably be at least 100:1, and most preferably at least 1000:1.

The referenced interfacial surface area to unit thickness ratio is calculated by resolving a layer into an element of length l and of width w, with a unitary thickness. Thus, where a layer is observed to approximate in interfacial surface area a rectangle of length $l_1$ and width $w_1$, and is observed to have an average thickness t, $l = l_1/t$ and $w = w_1/t$ approximately. The amounts l and w can be thought of as expressing the degree of extensiveness of a given layer in a direction compared to other layers of a like thickness. The interfacial surface area to unit thickness ratio of a given layer would be represented by the product $lw = (l_1/t)(w_1/t) = l_1 w_1/t^2$.

In considering how this ratio applies to describe our layers, one may refer to the cross-sectional photomicrographs of Fig. 11A. These photomicrographs depict the cross-sections of a specimen from an article molded as described in Example 2 below. The specimen was cut to expose cross-sections in the direction of flow during mold-fill and in a direction perpendicular thereto. The thickest layer which is clearly visible in Fig. 11B can safely be assumed to encompass an interfacial surface area at least equal to the product of the width of photomicrograph A and the distance from the right edge of B to where the white material appears in the midst of the layer, or at least equal to about $3.5 \times 1.5 = 5.25$ square inches ($33.87$ cm$^2$) on the scale of the photomicrographs. On the same scale, the thickness of the layer appears not to exceed about .2 inches (.5 cm) on the average, so that the interfacial surface area to unit thickness ratio for this layer appears to be at least about $5.25/(.2)^2=131.25$.

Further, one can discern a number of layers immediately above the layer just discussed which appear to be fully continuous over the widths of both photomicrographs, and yet have a thickness substantially less than that of the thickest layer so that the interfacial surface area to unit thickness ratio for these substantially parallel layers should be much greater than the about 131.25 ratio seen for the thickest layer. For example, the layer immediately above the thickest layer would appear to have an interfacial surface area of at least about $3.5 \times 3.5=12.25$ square inches (79.0 cm$^2$), and a thickness not exceeding .05 inches (0.127 cm). The ratio for this layer would then appear to be on the order of at least $(3.5 \times 3.5)/.05^2=(l_1 w_1)/t^2=4900$ .

Given that none of the layers in Fig. 11 exhibit large fluctuations in thickness, it appears likely that the layer above the thickest layer extends continuously for a still greater distance in both directions implicated in photomicrographs A and B, without dramatic corresponding increases in thickness such as would have the effect of decreasing the overall surface area to thickness ratio of the layer. Rather, the photomicrographs suggest that the full extent of the layer as seen on the scale of the photomicrographs may be significantly greater than 12.25 square inches (79.0 cm$^2$) while the average thickness of the layer would be the same or less than the 0.05 inches (0.127) cm) used above, so that the layer were it to be measured in full would have an interfacial surface area to unit thickness ratio correspondingly greater than even 4900.

Also by way of definition, a "substantial uniformity of composition" as used herein refers to the deviation of the local composition ratio within a wall of the molded article from the average composition ratio of the article as a whole, the latter ratio being determined by the ratio of feed rates of individual polymer components to the processes of the present invention. The local composition ratio refers to the composition ratio of a specimen from adjacent a critical surface of the molded article, the specimen being derived from within the composite stream in its desired configuration and having dimensions of at least the local thickness of the molded article in all directions.

A "substantial uniformity of composition" exists where local composition ratios along a critical surface of the article do not vary by more than 20 percent, and preferably no more than 10 percent, from the average composition ratio. In general terms, this substantial uniformity of composition is important in achieving a uniformity of properties along a critical surface of the article in the desired configuration.

Returning to a discussion of the coextrusion feedblock apparatus 18 illustrated schematically in Figure 1, it will usually be desirable to employ a 2, 3, 4 or 5-layer feedblock apparatus where only the first and second materials are used, so as to create for example with the 5-layer apparatus an ABABA-type layer structure in the first composite stream, or where first, second and third materials are used, creating an ABCBA-type structure for instance. Where such a 2,3,4 or 5-layer feedblock apparatus is used, it is thought that a feedblock such as is disclosed in United States Patent No. 3,577,265 to Chisholm et al. should be satisfactory, and a number of total layers of the first and second, or of the first, second and third materials in excess of the 2, 3, 4 or 5 respectively created thereby may be created by employing means for manipulating the first composite stream from coextrusion feedblock apparatus 18 to form a second composite stream which has an increased number of layers of the first and second, or of the first, second and third materials compared to the first composite stream. This manipulation is characterized in Figure 1 as "Layer Multiplication."

This means for manipulating the first composite stream to form a second composite stream preferably includes means for dividing the first composite stream to form a plurality of substreams which collectively comprise an increased number of layers of the first and second, or of the first, second and third materials compared with the first composite stream, and means for combining the substreams to form the second composite stream. The formation of the second composite stream from the first composite stream and a preferred apparatus for accomplishing this formation are schematically shown in Figures 1 and 2, and shown in more detail in Fig. 3.

Referring now to Fig. 2 specifically, a schematic of the creation of additional layers of the first and second materials of the first composite stream for the second composite stream is illustrated, and shows that a melt stream comprised of layers 19a and 19b, respectively, of the first and second materials in an ABA-type construction is divided in a plane which is generally perpendicular to the layers of the melt stream, then flattened and recombined by means for stacking the substreams. "Stacking" the substreams in this manner refers to the recombination of the substreams in a direction which is generally perpendicular to the layers of the substreams, such that the combined layers of the substreams are substantially parallel to one another.

An apparatus for dividing the first composite stream to form a plurality of substreams and to recombine these substreams to form a second composite stream by stacking the substreams is shown in Fig. 3. In Fig. 3 it can be seen that, at the entrance 20 of the interfacial surface generator (ISG) depicted in Fig. 3 a first composite stream represented by the arrow 22 is divided by a blade or thin wall section 24 which is generally perpendicularly oriented with respect to the layers of the first composite stream.

A substream 26 of the first composite stream ascends a generally rectangular-shaped, sloping passageway 28 to the left of blade 24, while a second substream 30 of the first composite stream descends a passageway 32 to the right of blade 24 which is similar in shape to the passageway 28 but which slopes downward.

Substreams 26 and 30 are then essentially stacked by passageways 34 and 36, with passageway 34 forcing substream 26 back to the right and passageway 36 forcing substream 30 to the left. The layers are kept from mixing during these lateral movements by a blade or thin wall section 38 which is oriented generally parallel to the layers of the substreams 26 and 30.

Substream 26 is then flattened and forced downward in a passageway 40 while substream 30 is flattened and forced upward in a passageway 42, the substreams 26 and 30 again being prevented from mixing by a thin wall section 44. The substreams 26 and 30 are then allowed to recombine to form a second composite stream which has a greater number of layers of the first and second materials than the first composite stream.

By using an apparatus such as is depicted in Figures 2 and 3, or by using other conventional ISG's such as sold by Charles Ross & Son Company, P. O. Box 2200, Hauppauge, N.Y., USA 11787 or as described in United States Patent No. 3,195,865, a great many layers of the various materials can be created by a sort of layer multiplication process.

An equivalent number of layers might be formed merely by using a larger coextrusion feedblock apparatus, such as disclosed in United States Patent No. 3,884,606 to Schrenk et al., and the coextrusion feedblock apparatus of that patent is preferred over more conventional feedblock apparatus employing a linear feedblock where a fairly large number of layers is to be generated without the use of the sort of apparatus depicted in Figures 2 and 3.

Under such circumstances, an apparatus as disclosed in United States Patent No. 3,884,606 should be less likely to contribute to a significant proportion of the layers at the edges of the first or second composite stream becoming discontinuous on forming the stream into a desired configuration.

As a rule, though, as compared to the use of a coextrusion feedblock apparatus alone, a standard 2, 3, 4 or 5-layer coextrusion feedblock apparatus is preferably used in combination with one or more ISG's as described above. As for selecting the type or types of ISG's for a particular application, it should be observed that the various known ISG's which could be used will generally distort the composite stream from the coextrusion feedblock apparatus to different degrees.

The ISG of Figures 2 and 3 generally produces less distortion of the nonrandomly arranged composite stream emerging from the coextrusion feedblock apparatus, for example, and a greater uniformity in layer thicknesses within the second composite stream and in an injection molded article having a desired configuration than do the commercially available four channel Ross elements with respect to layers of a given material. This difference is particularly illustrated in Figure 4A-F, which shows a series of comparative photomicrographs of cross-sections of a wall of a can which has been injection molded from layers of brown and white polypropylene, using ISG's of the type shown in Fig.3 and the Ross ISG's.

A lesser distortion of the first composite stream in the creation of the second composite stream should typically mean a lesser departure from the properties and characteristics desirably imparted to the first composite stream in the coextrusion feedblock apparatus 18, and a greater likelihood of those characteristics being transferred through to the finished article with fewer variables being involved in trying to achieve a desired configuration of that article having those properties.

Determining when one might desire to use a coextrusion feedblock apparatus only or in an ISG/feedblock combination with a particular combination of ISG's depends on a number of considerations, including for example:

1) whether the equipment is to be dedicated to a particular application for a sufficient length of time that the decreased flexibility involved in using a feedblock apparatus alone is not counterproductive in an overall sense;

2) whether the application is of such a demanding nature that the distortion involved in the manipulation of layers in the ISG's that would be required is of a sufficient nature that the generally increased fabrication costs associated with a complex feedblock apparatus is offset;

3) the availability of space and equipment, and specifically as to the latter, the availability of an appropriate feedblock apparatus;

4) the degree of distortion introduced with each ISG, within the limits imposed on the length of the ISG's by degradation and space concerns; and

5) whether a degree of degradation may be tolerated with respect to certain materials in the interests of lesser layer distortion through the ISG's.

The significance of greater layer uniformity being transferred through to the finished article by the careful selection of appropriate layer generation, arrangement and/or multiplication means lies in part, it is believed, in the optimization of those properties which are enhanced by a lamellar construction.

It has generally been noted that for a given system of diverse thermoplastic resinous materials in a given mold geometry, an optimum mix of properties may correspond roughly to a given number or range of numbers of layers of such property-affecting materials. Where this number of layers is large, or the wall thickness locally small adjacent a critical surface of the article, it may be difficult to achieve this optimal blend of properties throughout an article.

Further, it is generally true that all other things being equal, the larger the number of layers across a cross-section of the wall of an article, the greater the improvement in those properties which are enhanced by a lamellar construction, so long as the layers are substantially co-continuous across that cross-section of the article.

A significant variation in the layer thicknesses of a given property-affecting material across such a cross-section can be viewed as effectively reducing the number of layers of such a material as some layers approach a discontinuous nature, and while the effect of the difference in the amount of distortion involved in using one type of ISG as opposed to another might be small in one application, for other systems the effect might be sufficiently significant to warrant a preference for one type or one particular combination of ISG's.

Whether the desired number of layers is created in a second composite stream by the combination of a coextrusion feedblock apparatus and an ISG or a series of ISG's, or in a first composite stream merely by a coextrusion feedblock apparatus, a resulting layered melt stream is molded into a desired configuration by means for accomplishing this function, or the stream may first be passed through what has for present purposes been termed a "symmetricizer".

A "symmetricizer" is a device which has been developed for reducing the number and extent of exposed layer edges in a layered melt stream including diverse thermoplastic resinous materials prior to forming the stream into a desired configuration by injection molding, compression molding, transfer molding, injection blow molding, displacement blow molding or extrusion blow molding, and for correspondingly reducing the exposure of layer edges in that desired configuration of an article.

A symmetricizer might appropriately be employed where the properties which are sought to be enhanced by a lamellar construction could be significantly adversely affected by the exposure of a number of layer edges at a surface of the finished article to external influences, and where because of the mold geometry, method of forming the article, the materials used, etc., such exposure is likely to occur. One example of such a situation might be where a saponified ethylene-vinyl acetate copolymer is being used to provide an oxygen barrier to an article produced in accordance with the present invention, where upon exposure to moisture in the article's environment a loss in barrier and mechanical properties can be expected.

In general the symmetricizer is designed to reduce the exposure of layer edges in a layered melt stream by dividing the stream into two or more substreams having layers of thermoplastic materials, and then combining these substreams such that a majority of the layers of one of the substreams are generally angularly oriented with respect to a majority of the layers of a second substream.

What is generally intended in the operation of the symmetricizer device of this invention is first, to dispose some of those layer edges which would otherwise initially come into contact with the walls of a mold at a perpendicular angle and freeze in such an orientation so that they initially contact the walls, if at all, at a significantly greater or lesser angle. Secondly, it is thought that placing the majority of the layers of one of the substreams at an angle with respect to the majority of the layers of a second substream will create a tendency of the layer edges to enfold one another.

In the enfolded structures, the greater portion of layers of the first, second and third materials will preferably lie generally parallel to a critical surface, but with the layer edges of sensitive layers being interwoven and overlapping rather than intersecting a critical surface of the article.

Some degree of layer distortion is occasioned by this manipulation of the stream to be molded or otherwise formed into a desired configuration. The effects of this layer distortion are a cost associated with a reduction of exposed layer edges in the article, and it is expected that this cost will need to be considered in determining whether the use of a symmetricizer may be appropriate for a given application.

In multicavity injection molding it may not be necessary to employ an apparatus for reducing the exposure of layer edges where the use of the article and the materials used in constructing the article might otherwise suggest the advisability of such an apparatus, in that the flow of the layered stream through runners and gates will usually sufficiently randomize the layers of the stream to reduce the number and/or extent of exposed layer edges in both the layered stream and the finished article. Nevertheless, even in multicavity injection molding a symmetricizer may still be of some benefit in terms of the properties of articles produced thereby, and the desirability of employing a symmetricizer in any particular set of circumstances might more suitably be judged on a case by case basis.

A preferred symmetricizer is shown in Figures 5A-C , and comprises a plurality of inlet ports 46 and a plurality of outlet ports 48, the outlet ports 48 being generally divided into central outlet ports 48a and peripheral outlet ports 48b. Inlet ports 46 are generally rectangular in shape, and preferably have a long dimension which is parallel to the layers of first, second and third materials of the first or second composite stream which are received therein. The internal channels 50 of the symmetricizer which correspond to inlet ports 46 and outlet ports 48 are preferably of a constant rectangular configuration which matches that of corresponding inlet ports 46 and outlet ports 48, and preferably provide an incrementally consistent change of orientation from an inlet port 46 to an outlet port 48, as suggested in Fig. 5A. As shown, outlet ports 48a associated with substreams of the first or second composite stream passing therethrough are oriented substantially at a 90° angle with respect to one another, as are outlet ports 48b.

An illustration of the transformation worked by the symmetricizer of Fig. 5A-C may be seen in Fig. 6A and 6B, which depicts cross-sections of a layered melt stream of brown and white polypropylene prior to and following passage through a symmetricizer configured as in Fig. 5. An indication of how the reduction in exposed layer edges accomplished by the symmetricizer can translate through the formation step to a finished article can be seen in Fig. 7A and 7B, which depicts photomicrographs of cross-sections of the walls of cans injection molded from the same brown and white polypropylene with and without the symmetricizer. As may be seen from Figure 7A and 7B, the symmetricizer appears to have reduced at least the extent of layer edges which are perpendicular to a surface of the can, if not the number of such edges.

Referring back to Fig. 1, it can be seen that the first or second composite stream is thereafter molded into a desired configuration by a process other than thermoforming, such as by the preferred injection molding process or by compression molding, transfer molding, injection blow molding, displacement blow molding or extrusion blow molding.

The preferred manner of forming a first or second composite stream of the present invention into a desired configuration would, as previously suggested, involve some sort of injection molding. Coextrusion, though, has generally been developed as a continuous process, while injection molding is an intermittent process. One possible way in which the invention could be practiced with both processing methods integrated therein would use accumulators and valves to direct flow to one accumulator during the molding cycle of another.

Another possible way would be to use reciprocating screw injection of each of the first and second or first, second and third materials through the coextrusion feedblock apparatus, so that intermittent flow for injection molding is established before and during layer generation and arrangement into a composite melt stream, rather than afterwards.

A particularly preferred manner of forming a composite stream into a desired configuration involves multicavity injection molding. Previously, although it had been demonstrated in United States Patent No. 3,716,612 that a lamellar construction could be transferred from a layered melt stream into a finished article after injection molding, it was not known whether such a lamellar construction could be maintained throughout the full extent of a multicavity mold where one of the layered components was present as a minor phase ( at less than about 15 percent by volume, for example). By the present invention, a lamellar construction can be maintained throughout the extent of a multicavity mold for even minor components within a lamellar melt stream.

Examining the operation of the apparatus described above in performing the processes of the present invention for making moldable multilayer plastic articles, one potential application would be in the making of plastic containers for carbonated beverages. Such containers have in the past been made of polyethylene terephthalate (PET), which forms a fairly good barrier to the loss of carbon dioxide from the beverage. In an effort to lengthen the shelf life of these beverage containers, especially for smaller such containers, one might wish to create a multilayer structure incorporating layers of PET and of a resin with a better barrier to $CO_2$, such as an ethylene vinyl alcohol (EVOH).

In considering how one might achieve the benefits of the present invention with a PET/EVOH system as the first and second diverse thermoplastic materials, one approach that is presently foreseen would first match the viscosities of the PET and EVOH over a range of nondegradative temperatures within the general limits suggested by the coextrusion art, given the sensitivity of the system to discontinuities in layers and similar such considerations. For purposes of the present invention, generally materials having viscosities that differ by no greater than a factor of five can be appropriately used together in the present invention, and even greater viscosity mismatches might be tolerated, although the upper limits on this are not presently known.

The next step would be to consider whether PET and EVOH are sufficiently self-adhering to possess adequate structural integrity for a carbonated beverage container. If not, a third, compatibilizing material needs to be selected to adhere layers of the PET and EVOH together in the finished article.

A variety of compatibilizing materials are known, and may be advertised as adhering to both PET and EVOH, or may be known to adhere to both. Of those materials which emerge as potential candidates for use as the third material, one would select materials for further evaluation which could be matched to the PET and EVOH rheologically within the nondegradative temperature range established earlier, and which would not themselves degrade at the temperatures of interest.

The candidates could then be coextruded with the PET and EVOH, and peel tests conducted of the resulting structure to determine which of the candidate materials provided adequate adhesion and the amounts of such materials necessary to provide such adhesion. Taking into account such things as the materials cost associated with providing an adequate degree of adhesion and the availability of the material, a selection would then be made of the third material to be used.

The first, second, and third materials would then be melt coextruded with proper temperature controls on the source extruders to match the rheologies of the various materials, and with the second and third materials generally being used in the minimum amounts thought necessary to achieve a desired barrier, since the second and third materials will typically be more expensive than the first material whose purpose will normally be primarily of a structural nature. In this regard, it has been found that the second material can typically comprise less than about 10 percent by volume of the first composite stream without the layers of this material becoming discontinuous to an unacceptable degree when employed in a process and apparatus of the present invention.

One or more ISG's or a different feedblock may then be employed, as discussed earlier, to increase the number of layers. Testing of the articles produced by the process for various numbers of ISG's should establish whether the desired barrier can be achieved for the materials and levels of materials employed. It should be noted that the ISG's used will generally be controlled as to temperature as well to ensure that throughout the process the rheologies of the various materials remain properly matched without degradation having occurred with respect to one or more of the constituent materials of the melt stream.

This degradation will be a function of the temperatures experienced within the process as well as of the time in which the materials are exposed to these temperatures. Thus, the number of ISG's of a given length which can be employed may be limited, or the length of a given number of ISG's limited. We have found for the ISG's shown in Figures 2 and 3 that longer ISG's result in a more gradual manipulation of the incoming layered melt stream and a greater uniformity of the outgoing stream through the thickness of the stream. This greater uniformity through the thickness of the stream is desirable in lessening the likelihood of unacceptable layer distortions and discontinuities in the finished article. It would therefore be desirable to use longer ISG's in the creation of the composite stream to be formed into the desired configuration, unless degradation of one or more of the materials in the melt stream is a problem. Other considerations may limit the length of the ISG's used for a given resin system and application, such as space limitations, for example, but degradation is of particular concern for most such systems and applications.

The foregoing illustrates one possible approach to applying the processes and apparatus of the present invention, although other approaches are believed possible and should be apparent to persons of ordinary skill in the art in view of the discussion above and of the examples which follow.

It may be that the only properties which are sought to be enhanced by a lamellar construction of an article are those relating to the appearance of the article. The teachings of this disclosure and specifically the apparatus taught herein may be adapted to this use as well, and this use is considered encompassed within the scope of the present invention.

The processes of the present invention and apparatus for performing the processes, and the articles which result therefrom are perhaps best further illustrated by the following examples.

Example 1

In this example, a melt stream having a total of 129 alternating layers of brown and white pigmented polypropylene was created by extruding the brown and white polypropylene material through a three layer coextrusion feedblock apparatus, then feeding the resulting first composite stream through three of the four-channel Ross static mixers in series.

Extrusion rates within the apparatus of the present invention are in general calculated from the desired composition ratio in the molded part. Volumetric screw feeders were used in this and subsequent examples to meter pellets of the second and of the third compatibilizing material, if present, into 1 1/4 inch (3.2 cm) single screw 24:1 L:D extruders, with the extruder screw speeds set to maintain a starve-feed condition. The screw speed of the 1 3/4 (4.4 cm) inch single screw 24:1 L:D extruder used for the first material was then adjusted in this and other examples to obtain the desired total rate, which is determined by weight measurements with all of the extruders running.

A selection of polymer grades and an adjustment of individual melt temperatures to ensure a viscosity mismatch of a factor of no greater than 5 was undertaken in some of the other examples to obtain an acceptably uniform distribution of layers in the melt stream cross-section, as a severe mismatch in polymer viscosities can cause higher viscosity materials to channel through the center of the melt stream, resulting in edge-to-edge layer non-uniformity and local cross-sectional variation of composition ratio. Because the brown and white polypropylene used in this example had identical rheologies, however, these adjustments were not required for this particular example.

Ten ounce cans were transfer molded in a molding machine from a melt stream constructed as described above, with some cans being made after having had the melt stream pass through a symmetricizer as previously described. A layered "gob" was hand cut from the melt stream emerging from an ISG or from a symmetricizer and was manually deposited into the cold can mold shown in Figures 10A-C. Cans produced by the apparatus by bringing piston X and mold core Y together in the manner suggested by Figures 10A-C were studied by optical microscopy of specimens cut parallel and perpendicular to the flow direction of the material being molded, to verify the retention of the lamellar morphology of the melt stream and to ascertain the continuity or lack of continuity of the lamellae in the articles.

Substantially continuous layers were observed in all portions of the cans, and insofar as could be discerned by optical microscopy, cans formed after the addition of other ISG's to the series also possessed substantially continuous lamellae.

Fountain flow during mold fill was seen to have caused some layers to deform, stretch and fold over as materials diverted from the center of the mold channel to the mold wall, so that the number of layers in a cross-section was apparently increased and the orientation of layers relative to the inner or outer surfaces of the can varied along the sidewall's length. The apparent thickness of some of the layers shown in the accompanying photomicrographs may be somewhat deceiving, then, in that some of the layers must have been cut on a diagonal. This stretching and folding over did not appreciably affect the continuity of layers within the article, though.

Considering the photomicrographs of Fig. 7A and 7B, representative can sidewall cross-sections are shown which demonstrate the effect of the use of a symmetricizer. Layer edges without the symmetricizer solidified to a depth of approximately 20 percent of the wall thickness from both surfaces before the layers became substantially parallel to the surfaces.

In contrast, cans molded from a melt stream proceeding from a symmetricizer exhibited fewer layer edges at the inner and outer surfaces and layers were essentially substantially parallel to mold surfaces throughout the sidewalls of the container, as seen in Fig. 7A and 7B.

It should be noted for future examples using the can mold and transfer molding apparatus described above and shown in Fig. 10A-C that some difficulties were experienced with regard to the bottoms of cans produced by the apparatus. Layer patterns were generated in the can bottoms which were not matched by patterns created in the sidewalls of the cans, and such patterns are believed to be due to a number of factors peculiar to this transfer molding apparatus and process.

When the "gob" is first dropped into the mold cavity some solidification occurs, freezing relatively thick layers at the surface. With the mold closed and the piston forcing the charge into the can's sidewalls, solidification continues at the piston face and on the mold core while the molten core materials fill the sidewalls. With dissimilar polymers, delamination can occur, and is observed to occur as the bottom is compressed in the last stage of molding, when much of the material comprising the bottom has already solidified. Injection molding through a gated mold cavity will substantially avoid these distortions.

Thus, while transfer molding has initially been used to simulate as nearly as possible actual simple injection molding in the absence of a suitable injection molding machine, the difficulties experienced with the can bottoms just described makes these transfer molded cans as a whole somewhat inferior with respect to cans which could be expected from actual injection molding, while such cans as were made are nevertheless sufficient to demonstrate the operability of the present invention. To obtain a better representation or approximation of the multi layer articles which would be produced by such actual injection molding, property evaluation with respect to the cans of this and other examples has been limited to the sidewalls thereof whenever possible.

Example 2

In this example, the same brown and white polypropylene was used with a coextrusion feedblock apparatus alone to create a first composite stream having 233 layers, which was then transfer molded as in Example 1. No symmetricizer was employed. Specimens which were cut from throughout the sidewalls of the resulting cans, both parallel and perpendicular to the flow direction of the material being molded, showed substantially co-continuous lamellae also. Representative photomicrographs are provided in Figure 11A and 11B, and show the lamellae for a given specimen in the direction of flow and in a direction perpendicular to the flow of materials during mold-fill.

Example 3

In this example, the same apparatus was employed as in Example 1, except that the can mold of Figure 10A-C was replaced by the multicavity test specimen tooling of Fig. 8, and that the three Ross ISG's of Example 1 were replaced by six ISG's of the variety shown in Fig. 3. The four cavity test specimen mold was selected to provide standard ASTM test specimens for purposes of testing mechanical properties and to more closely simulate conventional injection molding, since in the test specimen mold a lamellar melt stream would flow through standard runners and gates and to four mold cavities of differing geometries.

The same brown and white polypropylene materials used in Example 1 were formed into a 129 layer melt stream, and the melt stream molded into the four test parts. Optical microscopy of cross-sections taken in the places indicated in Fig. 8 resulted in the photomicrographs shown in Fig. 9A-H. Substantially continuous lamellae were observed throughout, and a substantially uniform composition appeared to have prevailed throughout all cavities irrespective of runner length and cavity flow length.

Example 4

This example explores the effects of using an ISG of the type shown in Fig. 3 versus a commercially available ISG in an otherwise identical process. Cans were made from the brown and white pigmented polypropylene materials of Example 1 in an apparatus constructed as in Example 1 and using in some runs three of the Ross ISG's and in other runs six of the ISG's shown in Fig. 3. Photomicrographs shown in Fig. 4A-F demonstrate clearly that the ISG's of Fig. 3 produce a significantly better uniformity of layer distribution than do the Ross ISG's, as has been previously suggested.

Example 5

Multilayer cans were molded from a second composite stream in two wall thicknesses, 32 and 42 mils, and in the can molding apparatus of Fig. 10A-C. A high density polyethylene was used as the first material and possessed a melt index of 8 grams per 10 minutes and a density at 25°C of 0.954 grams per cubic centimeter. The second material comprised an ethylene vinyl alcohol copolymer having a 29 mole percent ethylene content, a melt flow rate of 8 grams per 10 minutes, and a density of 1.21 grams per cubic centimeter at 25°C, such a copolymer being commercially available under the mark Soarnol D™ from Nippon Gohsei.

Because the HDPE and EVOH do not adhere to one another well, an anhydride-modified, linear low density polyethylene-based Plexar 2581™ adhesive resin produced by Quantum Chemical Company was selected as the third material for adhering layers of the EVOH and HDPE together.

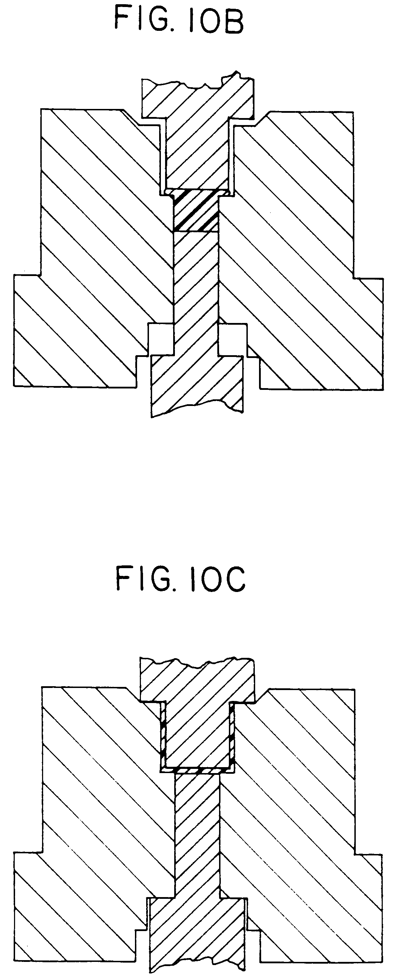

Each of the components was fed to an extruder as in Example 1, and combined in a five layer feedblock in an ABCBA-type layer order having layers of high density polyethylene, adhesive resin or compatibilizing material, and EVOH as the A, B, and C, respectively. The first composite stream thus created was manipulated in a series of ISG's to form a second composite stream, with both Ross ISG's and those of the type shown in Fig. 3, respectively, being employed in various runs. The second composite stream was then passed through a symmetricizer as in Fig. 5A-C and molded in the apparatus of Figures 10A-C by dropping a "gob" on the retracted piston X (Fig. 10A), lowering mold core Y (Fig. 10B), and then raising piston X to simulate injection molding (Fig. 10C).

The cans of 32 and 42 mil sidewall thicknesses thus formed were subjected to a number of tests, and the number and type of ISG's used, and the amounts of EVOH and compatibilizing material used were varied in different runs to quantify the effect of these variations on the performance characteristics of the cans.

The following basic measurements were undertaken:

A. Oxygen Barrier Measurements - The molded cans were double seamed with aluminum lids and sealed with epoxy. Oxygen permeabilities were measured at 23°C and 60 percent relative humidity on Modern Control's Oxtran 1050™ permeability tester. An average of three cans was tested for each condition or each run.

B. Xylene Permeability Measurements - The cans were filled with xylene, double seamed with aluminum lids and sealed with an epoxy resin. These were then placed inside a catch tray in an adequately vented hood, and weighed as a function of time at regular intervals over a period of 20 days to monitor the rate of loss of xylene at ambient temperature. An average of two cans was tested for each condition.

C. Microscopic Verification of Lamellar Morphology - For verification of the lamellar morphology in the can walls similar to that undertaken in previous examples, low voltage SEM microscopy was used. Sidewall cross-sections of the can near the bottom, in the middle and near the lip were examined in both the axial and hoop directions.

D. Environmental Stress Crack Resistance - To assess their resistance to environmentally induced failures, the molded barrier containers associated with each run were evaluated according to ASTM D2561-84. The molded cans were filled with 10 percent Igepal® C0630 detergent solution produced by GAF Corporation and double seamed with aluminum lids. Each container was placed in a separate reclosable plastic storage bag and placed in the hood at room temperature. The containers were inspected at regular intervals of time for evidence of cracks or leakage of the contents thereof, with the time to observation of the failure of a container being recorded. A minimum of three containers were tested for any given run.

Results of Testing and Discussion of Results

A. Oxygen Barrier Characteristics

The barrier performance of the molded containers was investigated as a function of the total number of layers in the melt stream entering the formation or molding process, the amount of EVOH barrier resin, and the amount of compatibilizing material used.

Before proceeding further it should be noted as discussed in Example 1, that the can molding apparatus depicted in Fig. 10 produced flawed can bottoms which would interfere or which could interfere with the oxygen permeability measurements. Accordingly, to compensate for the flawed bottoms of the containers the oxygen permeability of the whole container was determined first as to each individual container. After a steady state was reached, the bottoms were epoxied and a new steady state transmission rate was recorded. This was undertaken to illustrate the effects of the flawed bottoms on the oxygen transmission data for these lamellar transfer molded containers.

a. The Effect of the Number of Layers in the Stream to be Molded into a Desired Configuration

In order to evaluate the effect of barrier layer thickness on the oxygen transmission rate of the containers as a whole, the number of barrier layers and the total number of layers in the second composite stream was varied over a broad range by adding or removing ISG's of the type shown in Figure 3 and Ross ISG's.

Table 1 summarizes the results of varying barrier layer thickness on the oxygen permeability of the 32 mil (0.8 mm) thick sidewall containers. The data indicate a minimum in oxygen permeability when the number of layers in the second composite stream are within the range of 50 to 300. With relatively few layers in the stream, i.e., less than 50, the thicker barrier layers do not extend sufficiently in the mold cavity during the mold fill step to obtain adequate coverage along the entire length or cross-section of a container wall. With a large number of layers, the barrier layers are too thin and tend to become discontinuous. This has been confirmed by photomicrographs corresponding to having 1025 layers in the second composite stream, as compared to cross-sectional photomicrographs of articles molded from a second composite stream having 257 total layers. The tendency of the layers to become discontinuous causes the barrier performance of the container as a whole to eventually approach that of a conventional melt blend.

Table 1

| Effect of Number of Layers in Stream to Be Molded on Oxygen Transmission Rate of 32 Mil (0.8 mm) Wall Containers | | | |
|---|---|---|---|
| Number of Barrier Layers | Total Number of Layers | Oxygen Transmission Rate (cc/day atm. pkg) | |
| | | Whole Container | Bottom Epoxied |
| 8 | 33 | 0.0075 | 0.0066 |
| 16 | 65 | 0.0106 | 0.0050 |
| 32 | 129 | 0.0068 | 0.0038 |
| 64 | 257 | 0.0059 | 0.0046 |
| 128 | 513 | 0.0166 | 0.0078 |
| 256 | 1025 | 0.0256 | 0.0238 |
| 512 | 2049 | 0.0443 | 0.0386 |
| Melt Blend | --- | 0.5280 | --- |
| HDPE Control | --- | 0.3651 | 0.3060 |

The minimum in oxygen permeability in the 50 to 300 total layers range in the second composite stream amounts to approximately an 80-fold improvement in barrier performance as compared to an identically composed melt blend. The barrier level achieved in the containers of this example is equivalent to an oxygen ingression rate of less than 1.4 cubic centimeters in 12 months.

The oxygen permeability results as a function of the number of layers in the second composite stream for 42 mil (1.0 mm) thick sidewall containers are summarized in Table 2. The results indicate essentially the same trend in the dependence of the oxygen transmission rate of the cans on the number of layers in the second composite stream. In the 42 mil (1.0 mm) thick sidewall containers, below about 800 layers in the second composite stream, the barrier performance of the lamellar injection molded containers approaches that of a coextruded sheet with a perfectly uniform and continuous barrier layer in the structure.

Table 2

| Effect of Number of Layers in the Stream to be Molded on Barrier Performance of 42 mil (1.0 mm) Wall Containers, HDPE/Plexar 2581 /Soarnol D | | | |
|---|---|---|---|
| Number of Barrier Layers | Total Number of Layers | Oxygen Transmission Rate (cc/day . atm . pkg) | |
| | | Whole Container | Bottom Epoxied |
| 16 | 65 | 0.0003 | 0.0003 |
| 64 | 257 | 0.0007 | 0.0004 |
| 256 | 1025 | 0.0012 | --- |
| 1024 | 4097 | 0.0163 | 0.0096 |
| 16384 | 65537 | 0.0640 | 0.0508 |
| Melt Blend | --- | 0.2755 | 0.2455 |

The barrier level of about 0.001 cubic centimeters per day per atmosphere per package achieved with these containers, which is the lowest barrier level which can be reliably reported given the measurement techniques used, is equivalent to an oxygen ingression rate of less than 1 cubic centimeter in a two year time period.

b. The Effect of the Amount of EVOH Barrier Material in the Structure

Table 3 summarizes the oxygen permeability data for lamellar molded 42 mil (1.0 mm) thick sidewall cans with a varying amount of the EVOH barrier material incorporated within the containers. The total number of layers in the second composite stream which was molded was kept the same in each case at a total of 257 layers. The results indicate that at least 10 percent by weight of the particular EVOH material used is the minimum amount required to achieve the barrier levels of 0.001 cubic centimeters per day per atmosphere per package which were noted in Table 2.

Table 3

| Effect of Amount of EVOH in Structure in Performance of 42 Mil (1.0 mm) Wall Containers, 257 layers total HDPE/Plexar 2581/Soarnol D | | |
|---|---|---|
| Amount of Soarnol D, wt. % | Oxygen Transmission Rate (cc/day . atm . pkg) | |
| | Whole Container | Bottom Epoxied |
| 5 | 0.0062 | --- |
| 10 | 0.0008 | 0.0005 |
| 15 | 0.0003 | --- |

c. The Effect of the Amount of Plexar 2581™ Compatibilizing Material

Oxygen permeability measurements on containers having 257 total layers in the second composite stream and with 15 percent or 25 percent by weight of the Plexar 2581™ compatibilizing material showed no significant difference between the containers so constructed.

Given that a significant use of barrier resins is in food packaging and packaging materials, and given also that many consumers may prefer a pigmented or opaque packaging material, the effect on oxygen barrier performance of the addition of titanium dioxide pigment to 32 (0.8 mm) and 42 mil (1.0 mm) cans having 257 total layers was studied. The results show that the oxygen permeability characteristics of the 42 mil cans was not significantly affected by the addition of titanium dioxide while the 32 mil cans exhibited a noticeable loss of barrier due to larger titanium dioxide particles bursting through the thin layers of EVOH.

B. Xylene Permeation Characteristics

Many of the factors which were tested with regard to the oxygen permeability of cans molded from the high density polyethylene/Plexar/Soarnol D system were considered with regard to xylene permeation characteristics also, with the effect of the total number of layers on the xylene permeability of 32 mil (0.8 mm) can containers being summarized in Table 4. The data indicate a minimum in xylene permeability in the range of from about 50 to about 300 total layers in the second composite stream, which is similar to what was noted in the case of oxygen permeability. This minimum amounts to approximately a 160-fold improvement in barrier performance to xylene compared with a 32 mil (0.8 mm) high density polyethylene can. The melt blend apparently exhibits no real improvement over the high density polyethylene control. The barrier level which is achieved in the 32 mil (0.8 mm) cans is equivalent to a xylene weight loss of less than .01 percent in 12 months. By comparison, there was virtually no loss of xylene to the atmosphere in a 20 day period from a 42 mil (1.0 mm) high density polyethylene/Soarnol D™ can.

Table 4

| Effect of Number of Layers in Stream to be Molded on Xylene Permeation Rate of HDPE/Soarnol D 32 Mil (0.8 mm) Wall Containers | | |
| --- | --- | --- |
| No. of Barrier Layers | Total No. of Layers | Wt Loss of Xylene mg/hr |
| 8 | 33 | 0.657 |
| 16 | 65 | 0.371 |
| 32 | 129 | 0.201 |
| 64 | 257 | 0.363 |
| 128 | 513 | 0.461 |
| 256 | 1025 | 1.811 |
| 512 | 2049 | 2.791 |
| Melt Blend | --- | 36.571 |
| HDPE Control | --- | 32.600 |

The addition of titanium dioxide pigment had a negligible effect on xylene permeability in this system for 42 mil (1.0 mm) thick cans molded from a second composite stream having 257 total layers.

C. Environmental Stress Crack Resistance

The cans which were tested showed no evidence of failure even after 240 hours at room temperature. Typically an acceptable environmental stress crack resistance for cans made from polyethylene, for example, is 120 hours.

Example 6

In this example multilayer cans were molded as in Example 5, but with a resin system including high density polyethylene having a melt index of 0.7 grams per 10 minutes and a density of 0.96 grams per cubic centimeter as the first material, Selar® PA3426 amorphous nylon having a reported density of 1.19 grams per cubic centimeter (commercially available from E. I. du Pont De Nemours and Company Inc. Wilmington, Delaware) as the second material, and the assignee's Primacor® 1410 coextrudable tie layer resin, having a melt index of 1.5 grams per 10 minutes and a density of 0.938 grams per cubic centimeter, as the third material.

The cans which resulted were subjected to xylene and oxygen barrier tests which are described in detail in Example 5. The xylene permeability results are summarized in Table 5, and show that the high density polyethylene/nylon/Primacor® 42 mil molded containers exhibit over a fifty-fold improvement in xylene permeability over a 42 mil (1.0 mm) high density polyethylene can at ambient temperatures. This improvement appears to be comparable with the permeability figures reported in United States Patent Nos. 4,410,482 to Subramanian, 4,416,942 to DiLuccio, and 4,444,817 to Subramanian for articles made by an extrusion blow molding process.

EP 0 506 872 B1

Table 5

| Xylene Permeability of HDPE/Amorphous Nylon Containers | | |
|---|---|---|
| Structure | Avg. Weight Loss of Xylene | |
| | mg/hr | %/hr |
| HDPE | 32.031 | 0.0109 |
| HDPE (71% by volume)/Primacor 1410 (13%)/Selar PA 3426 (16%) | 0.607 | 0.0007 |
| *256 barrier layers (1025 total layers) | | |

The oxygen permeability characteristics of the 42 mil (1.0 mm) thick molded cans of this example are shown in Table 6. An eight-fold improvement in oxygen barrier performance over cans molded from high density polyethylene alone is evident. This figure is also similar to the improvement in oxygen barrier achieved with a high density polyethylene/Selar® RB nylon laminar mixing process, as reported in Subramanian, "Permeability Barriers by Controlled Morphology of Polymer Blends," Polymer Engineering Science, Volume 25, No. 8, Mid June 1985.

Table 6

| Oxygen Barrier Performance of HDPE/Amorphous Nylon Containers | | |
|---|---|---|
| Structure | Oxygen Transmission Rate (cc/day. atm. package) | |
| | Whole Container | Bottom Epoxied |
| HDPE | --- | 0.1980 |
| HDPE (71% by volume)/Primacor 1410 (13%)/Selar PA 3426 (16%) | 0.356 | 0.0254 |
| *256 barrier layers (1025 total layers) | | |

Example 7

This example used the apparatus and process of Examples 1 and 2 in exploring a system having polypropylene as the structural component, rather than the HDPE previously studied, with the same EVOH as used in previous examples. Cans were molded in the 32 mil (0.8 mm) and 42 mil (1.0 mm) wall thicknesses according to the procedures set forth in Example 1, and the barriers of these containers to oxygen and xylene were studied as a function of several variables.

With regard to oxygen barrier, the effects of the amount of EVOH barrier resin in the structure, and of the particular compatibilizing material used were studied.

a. Effect of Amount of EVOH Barrier Resin

Cans of the 42 mil (1.0 mm) wall thickness were molded for this test using a polypropylene characterized by a melt flow index of 12 and a density of 0.903 grams per cubic centimeter as a first material, Soarnol D® EVOH as a second material, and Admer QF-500 tie layer resin from Mitsui Petrochemicals Industries, Ltd. (an anhydride-grafted polypropylene with a melt flow rate (MFR) of 3 grams per 10 minutes and a density of 0.91 grams per cubic centimeter) as the third material at 25 percent by weight throughout.

The results of oxygen permeability testing conducted as in previous examples for the effect of various amounts of the EVOH barrier resin are shown in Table 7, and correspond to a barrier efficiency of about 50% relative to an ideally coextruded 1025 layer coextruded sheet. The lower barriers achieved were believed indicative of substantial layer break-up and discontinuities in the molded can walls. Scanning electron microscopy of sidewall cross-sections near the bottom, middle and top of the can in both the axial and hoop directions confirmed that such layer breakup was present.

14

Table 7

| Effect of Amount of EVOH in Structure on Barrier Performance of PP/EVOH Containers | | |
|---|---|---|
| Amount of EVOH, Wt Percent | Oxygen Transmission Rate (cc/day. atm. package) | |
| | Whole Container | Bottom Epoxied |
| 10 | 0.0117 | 0.0100 |
| 15 | 0.0067 | 0.0022 |
| 20 | --- | 0.0025 |
| *256 barrier layers (1025 total layers) PP and 25 wt % Admer QF500 tie layer resin | | |

b. Effect Of Compatibilizing Material

Though the Admer QF-500® tie layer resin exhibited strong interfacial adhesion in preliminary testing with the EVOH and polypropylene materials selected, with peel strengths in five-layer coextruded sheets of 5.2 pounds per inch and 7.5 pounds per inch in the machine and transfer directions, respectively, at the 5 percent level by weight, the molded cans delaminated easily with a gentle squeeze or in some cases only with the air ejection of the cans from the mold.

In an attempt to explore ways to improve the adhesion between the polypropylene and EVOH layers, other compatibilizing materials were evaluated. These were Admer QF-551 tie layer material from Mitsui (an anhydride-grafted polypropylene with an MFR of 5.7 and a density of 0.89) and Kraton® FG-1901X compatibilizing material from Shell Chemical Company, Houston, Texas (a functionalized triblock SEBS copolymer of a density of 0.91 grams per cubic centimeter). A comparison of oxygen permeation data for cans molded using the original Admer® QF-500 and the Kraton® FG-1901X materials shows the Admer® QF-500 tie layer material to be superior (see Table 8). In a comparison between the Admer® QF-500 and Admer® QF-551 tie layer resins, the latter resulted in better looking cans but no significant improvement in barrier or adhesion was observed.

It was also thought that increasing the melt temperature of the charged composite stream might increase the flow of the Admer® QF-500 compatibilizing material and improve adhesion. Increasing the temperature of the charged composite stream from 440°F-475°F showed no improvement in adhesion or barrier performance, however.

Table 8

| Effect of Compatibilizing Material in Structure on Barrier Performance of 42 Mil (1.0 mm) PP/EVOH Containers | | |
|---|---|---|
| Compatibilizing Material | Oxygen Transmission Rate (cc/day. atm. package) | |
| | Whole Container | Bottom Epoxied |
| Admer™ QF500 | 0.0021 | 0.0017 |
| Kraton™ G1901X | 0.0351 | 0.0272 |
| *64 barrier layers (257 total layers) 65% PP and 10 wt % Soarnol™D EVOH | | |

Some testing was also done of the containers and of the various materials and amounts thereof for xylene permeation resistance. The use of 10 percent Soarnol D® EVOH resulted in a one hundred seventy-two-fold improvement in xylene permeation resistance over a polypropylene control. An additional 5 percent by weight of the Soarnol D® EVOH brought the improvement to nearly a thousand-fold. (See Table 9)

## EP 0 506 872 B1

Table 9

| Effect of Amount of EVOH in Structure on Xylene Permeation of PP/EVOH Containers | |
|---|---|
| Amount of SOARNOL™ D EVOH (wt %) | Avg. Wt. Loss of Xylene mg/hr |
| 0 | 122.37 |
| 10 | 0.709 |
| 15 | 0.127 |
| 20 | 0.027 |
| *64 barrier layers (257 total layers) PP and 25 wt % Admer™ QF500 compatibilizing material | |

Where the barrier resin used was Eval® F resin (1.3 melt index, 1.19 grams per cubic centimeter density, Kuraray Company, Ltd.), the xylene permeation rate through 32 mil (0.8 mm) thick wall containers molded from a 257 layer composite stream corresponded to 1.287 milligrams per hour of xylene weight loss. This figure represents nearly a hundred-fold improvement in xylene barrier over a polypropylene control, as compared to a one hundred seventy-two-fold improvement with 10 percent Soarnol D® EVOH.

<u>Example 8</u>

In this example and in Examples 9 and 10, the effects of a lamellar construction are explored in terms of the environmental stress crack resistance(ESCR), deflection temperature under load(DTUL), and heat sag of various structural systems. In this and subsequent examples where performed, the environmental stress crack resistance for a test specimen was determined according to ASTM D1693 with synthetic gasoline (75 weight percent isooctane and 25 weight percent toluene) at 2000 psi constant applied stress. The distortion temperature under load for unannealed and annealed specimens was determined according to ASTM D648, and the heat sag after a specimen had been exposed to a temperature of 250 degrees Fahrenheit for a period of an hour.

This example looks primarily at systems of polycarbonate/polybutylene terephthalate (PBT) which are comprised of 15 parts and 30 parts of Celanex® 2002 PBT from Hoechst Celanese with the remaining 85 and 70 parts, respectively, comprising the assignee's Calibre® 300-10 polycarbonate. The Celanex™ 2002 material possessed a reported density of 1.31 grams per cubic centimeter (with no melt index provided by the manufacturer), while the assignee's polycarbonate material had a melt index of 10 grams per 10 minutes and a density of 1.2 grams per cubic centimeter.

Test specimens were for one set of tests molded using the same equipment, except for the substitution of a four cavity test specimen mold as detailed earlier, and according to the same general procedures used in previous Examples from layered composite streams having 33, 65, 129, 257, 513 and 1,025 total layers, and from a melt blend both by transfer and injection molding. Test results from the first set of tests for the basic 85/15 system are reported in Table 10, while the results for the basic 70/30 system are shown in Table 11. The results obtained for a polycarbonate/toughened PBT system are provided in Table 12. Based on additional tests conducted to determine the effect of a lamellar construction on other structural properties, no loss in other structural properties was seen for any of the specimens thus made and otherwise tested compared to specimens formed from a melt blend of the same materials.

Table 10

| Lamellar Molded PC/PBT (85/15) Specimens Effect of Number of Layers in Stream to be Molded | | | | |
|---|---|---|---|---|
| No. of Layers | ESCR(min.) | DTUL Unannealed/Annealed (°C/°C) | | Heat Sag (mm) |
| | | @ 66 psi (455kPa) | @ 264 psi (1820kPa) | |
| 33 | 94.3±42.9 | 140.4/151.6 | 118.1/149.4 | 1.8±1.4 |
| 65 | 81.3±12.3 | 140.5/150.1 | 125.0/147.6 | 3.4±0.3 |
| 129 | 51.0±4.6 | 137.8/148.0 | 120.2/146.0 | 2.5±0.3 |
| 257 | 68.3±8.1 | 135.3/150.6 | 121.8/146.4 | 2.5±1.1 |
| 513 | 64.0±10.5 | 135.6/146.5 | 116.6/142.0 | 2.7±1.1 |
| 1025 | 52.0±4.6 | 133.0/145.7 | 116.5/140.8 | 3.2±1.3 |
| Melt Blend, Injection Molded | 15.0±0.1 | | | |
| Melt Blend, Transfer Molded | 14.7±2.1 | 116.5/125 | 104.9/120.0 | 34.7± |

Table 11

| Lamellar Molded PC/PBT (70/30) Specimens Effect of Number of Layers in Stream to be Molded | | | | |
|---|---|---|---|---|
| No. of Layers | ESCR(min.) | DTUL Unannealed/Annealed (°C/°C) | | Heat Sag(mm) |
| | | @ 66psi (455kPa) | @ 264psi (1820kPa) | |
| 33 | 203.7±22.5 | 139.1/151.6 | 119.2/149.3 | 3.4±0.7 |
| 65 | 193.5±20.5 | 138.7/149.5 | 118.2/147.0 | 5.5±0.9 |
| 129 | 167.7±36.2 | 136.8/147.6 | 116.0/143.7 | 3.9±0.3 |
| 257 | 198.7±22.0 | 133.7/150.2 | 109.5/145.3 | 3.8±1.7 |
| 513 | 210.3±101 | 133.4/146.1 | 120.2/141.8 | 2.8±1.0 |
| 1025 | 153.5±27.6 | 133.2/144.7 | 111.6/139.5 | 3.5±0.4 |
| Melt Blend, Transfer Molded | 176.0±58.0 | 116.9/125.4 | 101.2/120.2 | 33.1±0.1 |

Table 12

| Lamellar Molded PC/PBT (85/15) (Toughened) Specimens. Effect of Number of Layers in Stream to be Molded | | |
|---|---|---|
| No. of Layers | DTUL Unannealed/Annealed (°C/°C) | |
| | @ 66 psi (455kPa) | @ 264 psi (1820kPa) |
| 65 | 135.4/148.2 | 116.0/144.8 |
| 257 | 133.0/147.3 | 120.0/143.2 |
| Melt Blend, Transfer Molded | 116.0/123.3 | 106.8/118.4 |
| Melt Blend, Injection Molded | 114.9/122.4 | 103.7/117.8 |

Test specimens were also prepared on the same equipment and having the same number of layers but at three different proportions of the materials to examine the effect of composition changes on the DTUL and ESCR of the specimens. The results from these tests are reported in Table 13, and again, no loss in other structural properties was seen for specimens made and tested as indicated.

Table 13

| Effect of Composition (129 layers) | | | | |
|---|---|---|---|---|
| Amount of PBT (wt %) | ESCR(min.) | DTUL Unannealed/Annealed (°C/°C) | | Heat Sag(mm) |
| | | @ 66 psi (455kPa) | @ 264 psi (1820kPa) | |
| 15 | 51.0±4.6 | 137.8/148.0 | 120.2/146.0 | 2.5±0.3 |
| 30 | 167.7±36.2 | 136.8/147.6 | 116.0/143.7 | 3.9±0.3 |
| 50 | >5700 | 133.9/146.6 | 102.0/140.4 | -- |

Example 9

This example looks at the benefits accruing from a lamellar construction in terms of the environmental stress crack resistance and deflection temperature under load of systems having 15 and 30 parts of Celanex® 2002 PBT by weight and 85 and 70 parts, respectively, of a 65 to 35 part polycarbonate/ABS blend, as a function of the total number of layers formed in the composite stream to be molded. The blend had a melt index of 3 grams per 10 minutes (230°C/3.8 kg) and a density of 1.12 grams per cubic centimeter, while the PBT had the properties ascribed to the Hoechst Celanese material previously. Test members were molded as in Example 8, with the same maintenance of other physical or structural properties seen in Example 8. The ESCR and DTUL results are reported in Tables 14 and 15 below, respectively, for the 85/15 and 70/30 systems.

Table 14

| Effect of Number of Layers in Stream to be Molded - PC/ABS Blend/PBT (85/15) | | | | |
|---|---|---|---|---|
| No. of Layers | ESCR(min.) | DTUL Unannealed/Annealed (°C/°C) | | Heat Sag (mm) |
| | | @ 66 psi (455kPa) | @ 264 psi (1820kPa) | |
| 33 | 56.7±25.0 | 123.6/137.5 | 93.8/127.9 | 11.6±0.7 |
| 65 | 86.3±32.5 | 124.1/128.0 | 99.8/115.2 | 10.0±1.1 |
| 129 | 58.7± 12.7 | 125.0/137.5 | 96.2/132.3 | 10.3± |
| 257 | 30.7±8.3 | 122.8/135.9 | 95.3/124.3 | 21.9±1.5 |
| 513 | 53.7±6.4 | 120.2/132.5 | 92.9/122.2 | 16.7±2.1 |
| 1025 | 34.0±4.4 | 118.1/130.9 | 89.0/120.7 | 23.9±1.0 |
| Melt Blend, Transfer Molded | 8.7±0.6 | 96.1/105.6 | 86.6/102.1 | 125.6± |
| Melt Blend, Injection Molded | 12.0±3.0 | 95/106 | 86/99 | - |

Table 15

| Effect of Number of Layers in Stream to be Molded - PC/ABS Blend/PBT (70/30) | | | | |
|---|---|---|---|---|
| No. of Layers | ESCR(min.) | DTUL Unannealed/Annealed (°C/°C) | | Heat Sag (mm) |
| | | @ 66 psi (455kPa) | @ 264 psi (1820kPa) | |
| 33 | 95.7±24.0 | 123.3/137.6 | 96.1/130.1 | 8.3±2.7 |
| 65 | 121.7±23.4 | 124.7/137.3 | 97.1/129.2 | 7.8±4.7 |
| 129 | 107.0±8.7 | 123.9/136.4 | 98.3/128.6 | 11.0±3.0 |
| 257 | 93.0±31.0 | 119.1/131.9 | 92.2/120.0 | 15.2±3.2 |
| 513 | 117.3±22.8 | 118.1/131.2 | 87.3/122.4 | 12.6±1.3 |
| 1025 | 100.0±14.9 | 113.3/128.4 | 86.0/115.7 | 16.4±2.0 |
| Melt Blend, Transfer Molded | 64.0±10.5 | 92.8/103.4 | 75.6/97.4 | 80.1±1.4 |
| Melt Blend, Injection Molded | 13.7±1.2 | 89/101 | 73/92 | - |

## Example 10

This example explores the environmental stress crack resistance and deflection temperature under load of test articles molded from composite streams having various numbers of layers of the assignee's Calibre® 300-10 polycarbonate (melt index of 10 grams per 10 minutes;density of 1.2 grams per cubic centimeter) and Traytuf® 1006-C polyethylene terephthalate (PET) from The Goodyear Tire and Rubber Company (melt index not reported; density of 1.37 grams per cubic centimeter), in systems comprising 30 parts PET with 70 parts polycarbonate by weight, and 15 parts PET with 85 parts polycarbonate by weight. The molding and testing procedures and equipment were those used in Examples 8 and 9 above. Test results are reported in Tables 16 and 17, and again no loss of other structural properties was observed compared to a melt blend of the materials in these systems.

Table 16

| Effect of Number of Layers in Stream to be Molded - PC/PET (85/15) | | | | |
|---|---|---|---|---|
| No. of Layers | ESCR(min.) | DTUL Unannealed/Annealed (°C/°C) | | Heat Sag (mm) |
| | | @ 66 psi (455kPa) | @ 264 psi (1820kPa) | |
| 65 | 24.3±5.9 | 137.5/147.8 | 111.4/145.5 | 4.5±0.4 |
| 129 | 24.3±0.6 | 136.2/148.7 | 113.2/146.0 | 3.4±0.6 |
| 257 | 25.0±6.2 | 134.6/147.6 | 112.0/145.3 | 5.3±1.2 |
| 513 | 25.0±5.2 | 138.0/148.1 | 108.7/145.8 | 5.6±0.4 |
| 1025 | 26.0±3.5 | 137.5/148.2 | 109.6/145.6 | 4.8±0.3 |
| Melt Blend, Transfer Molded | 11.3±1.5 | 131.7/144.3 | 107.4/141.5 | 4.5±0.3 |

Table 17

| Effect of Number of Layers in Stream to be Molded - PC/PET (70/30) | | | | |
|---|---|---|---|---|
| No. of Layers | ESCR(min) | DTUL Unannealed/Annealed (°C/°C) | | Heat Sag (mm) |
| | | @ 66 psi (455kPa) | @ 264 psi (1820kPa) | |
| 65 | 23.0±2.0 | 133.4/147.4 | 97.8/144.6 | 6.0±0.4 |
| 129 | 32.3±5.1 | 135.5/148.5 | 100.3/145.9 | 4.2±0.9 |
| 257 | 22.0±1.7 | 136.2/147.8 | 97.5/145.5 | 7.0±1.0 |
| 513 | 34.3±1.5 | 135.7/148.7 | 101.4/146.6 | 5.5±0.4 |
| 1025 | 26.0±1.0 | 133.3/147.5 | 100.7/144.2 | 7.2±0.8 |
| Melt Blend, Transfer Molded | 19.3±4.0 | 125.4/142.6 | 97.2/139.7 | 5.8±0.4 |

The foregoing examples demonstrate that the processes and apparatus of the present invention are well suited for overcoming the deficiencies of the known art.

Large improvements in barrier to gases and solvents and in environmental stress crack resistance, and additional improvements in distortion temperature under load, are seen to result from such a lamellar construction compared to articles comprised of a melt blend of the same materials in the same proportions.

Similar improvements in filled systems with respect to the control of the coefficient of linear thermal expansion of an article, in the shielding of electromagnetic interference, and in ignition resistance should also be available by the lamellar constructions made possible by the present invention.

## Claims

1. A process for making a moldable substantially continuously-layered multilayer plastic article, comprising the steps of:

    co-extruding a composite stream comprised of discrete, generally planar and parallel layers of at least first and second diverse thermoplastic materials; and

    forming the composite stream into a desired configuration by some process other than thermoforming, said desired configuration having at least one critical surface such that a plurality of discrete and substantially continuous layers of the first and second materials lie generally parallel to such surface and wherein the layer thicknesses of the first and second materials in the composite stream are selected so that the desired configuration possesses a substantial uniformity of composition, whereby a substantially continuously-layered multilayer plastic article is formed.

2. A process as claimed in claim 1, including the step of manipulating the composite stream to form an increased number of discrete, generally planar and parallel layers of the first and second materials prior to forming thereof.

3. A process as claimed in Claim 2, wherein the step of manipulating the composite stream includes:

    dividing the composite stream to form a plurality of sub-streams collectively containing an increased number of discrete, generally planar layers of the first and second materials compared to the composite stream before said division; and

    stacking the plurality of sub-streams.

4. A process as claimed in Claim 3, wherein the dividing and stacking steps are accomplished by passing the composite stream through one or more interfacial surface generators.

5. A process as claimed in any one of the preceding claims, wherein in the co-extrusion step, at least first, second and third diverse thermoplastic materials are co-extruded in a selected layer order, the selected layer order being characterized by the placement of a layer of the third material between any otherwise adjacent layers of the first and second materials.

6. A process as claimed in any one of the preceding claims, wherein the composite stream is formed into a desired configuration by injection molding, transfer molding, compression molding, injection blow molding, extrusion blow molding, or displacement blow molding.

7. A process as claimed in any one of the preceding claims, wherein the composite stream is injected into a plurality of mold cavities as part of a multicavity injection molding process.

8. A process as claimed in Claim 7, wherein the mold cavities possess differing geometries.

9. A process as claimed in Claim 7 or Claim 8, wherein at least one of the first and second materials comprises less than 15 percent by volume of the injected stream.

10. A process as claimed in claim 9, wherein layers of the at least one material extend fully throughout the plurality of mold cavities and the multilayer articles produced therefrom.

11. A process as claimed in any one of the preceding claims, wherein no more than 10 percent of the layers of the first, second and, if present, the third materials adjacent the critical surface have an interfacial surface area to unit thickness ratio of less than 10 to 1.

12. A process as claimed in any one of the preceding claims, wherein at least the plurality of layers of the first, second and, if present, the third materials lying generally parallel to the critical surface are individually substantially uniformly thick.

13. A process as claimed in any one of the preceding claims, wherein at least the plurality of layers of the first, second and, if present, the third materials lying generally parallel to the critical surface have interfacial surface area to unit thickness ratios of at least 100 to 1.

14. A process as claimed in Claim 12, wherein at least the first, second and, if present, the third materials lying generally parallel to the critical surface have interfacial surface area to unit thickness ratios of at least 1000 to 1.

15. A process as claimed in any one of the preceding claims, wherein the desired configuration possesses a uniformity of composition with respect to at least the first, second and, if present, the third materials adjacent the critical surface.

16. A process as claimed in any one of the preceding claims, wherein the layers of the first, second and, if present, the third materials lying generally parallel to the critical surface are evenly distributed across a cross-section of the article adjacent such surface.

17. A process as claimed in any one of the preceding claims, wherein the co-extruding is carried out intermittently.

18. A process as claimed in Claim 17, wherein the co-extruding is carried out by a reciprocating screw injection process.

19. An asymmetrical moldable multilayer plastic article produced by a process as claimed in any one of the preceding claims and comprising at least 17 discrete layers of a plurality of diverse thermoplastic resinous materials extending continuously throughout the article.

**Patentansprüche**

1. Verfahren zur Herstellung eines formbaren, aus mehreren im Wesentlichen kontinuierlichen Schichten bestehenden Gegenstands aus Kunststoff, das die Stufen umfaßt, in denen man:

einen geschichteten Strom koextrudiert, der diskrete, allgemein ebene und parallele Schichten aus mindestens einem ersten und einem zweiten, andersartigen thermoplastischen Material umfaßt; und

den geschichteten Strom mittels eines Verfahrens in eine gewünschte Konfiguration bringt, das kein Tiefziehverfahren ist, wobei die gewünschte Konfiguration mindestens eine kritische Oberfläche hat, so daß eine Mehrzahl von diskreten und im wesentlichen kontinuierlichen Schichten des ersten und des zweiten Materials allgemein parallel zu dieser Oberfläche liegen, und wobei die Schichtdicken des ersten und des zweiten Materials in dem geschichteten Strom so ausgewählt sind, daß die gewünschte Konfiguration eine im wesentlichen einheitliche Zusammensetzung aufweist, wodurch ein aus mehreren im wesentlichen kontinuierlichen Schichten bestehender Gegenstand aus Kunststoff gebildet wird.

2. Verfahren nach Anspruch 1, das die Stufe einschließt, in der man den geschichteten Strom so verändert, daß er vor seiner Verformung eine erhöhte Anzahl von diskreten, allgemein ebenen und parallelen Schichten aus dem ersten und dem zweiten Material bildet.

3. Verfahren nach Anspruch 2, wobei die Stufe der Veränderung des geschichteten Stroms einschließt:
   die Aufteilung des geschichteten Stroms in eine Mehrzahl von Teilströmen, die zusammen eine größere Anzahl von diskreten, allgemein ebenen Schichten aus dem ersten und dem zweiten Material aufweisen als der geschichtete Strom vor seiner Aufteilung; und
   das Aufeinanderschichten der Mehrzahl von Teilströmen.

4. Verfahren nach Anspruch 3, wobei die Aufteilung und das Aufeinanderschichten bewirkt werden, indem man den geschichteten Strom einen oder mehrere Grenzflächen erzeugende Vorrichtungen passieren läßt.

5. Verfahren nach einem der vorhergehenden Ansprüche, wobei in der Koextrusionsstufe zumindest erste, zweite und dritte unterschiedliche thermoplastische Materialien in ausgewählter Schichtenfolge koextrudiert werden, wobei die ausgewählte Schichtenfolge dadurch gekennzeichnet ist, daß eine Schicht aus dem dritten Material zwischen beliebigen anderenfalls benachbarten Schichten aus dem ersten und dem zweiten Material angeordnet ist.

6. Verfahren nach einem der vorhergehenden Ansprüche, wobei der geschichtete Strom durch ein Spritzgußverfahren, Preßspritzverfahren, Preßformverfahren, Spritzblasverfahren, Extrusionsblasverfahren oder Verdrängungsblasverfahren in die gewünschte Konfiguration umgewandelt wird.

7. Verfahren nach einem der vorhergehenden Ansprüche, wobei der geschichtete Strom als Teil eines Mehrhohlrauminjektion-Formgebungsverfahrens in eine Mehrzahl von Formhohlräumen injiziert wird.

8. Verfahren nach Anspruch 7, wobei die Formhohlräume unterschiedliche Geometrien haben.

9. Verfahren nach Anspruch 7 oder 8, wobei zumindest eines der ersten und zweiten Materialien weniger als 15 Volumenprozent des injizierten Stroms umfaßt.

10. Verfahren nach Anspruch 9, wobei sich Schichten aus dem zumindest einen Material vollständig durch die Mehrzahl von Formhohlräumen und die daraus erzeugten, aus mehreren Schichten bestehenden Gegenstände erstrecken.

11. Verfahren nach einem der vorhergehenden Ansprüche, wobei nicht mehr als 10 Prozent der Schichten aus dem ersten, dem zweiten und, falls vorhanden, dem dritten Material, die der kritischen Oberfläche benachbart sind, ein Verhältnis von Grenzfläche zu Einheitsdicke von weniger als 10:1 aufweisen.

12. Verfahren nach einem der vorhergehenden Ansprüche, wobei zumindest die Mehrzahl der Schichten aus dem ersten, dem zweiten und, falls vorhanden, dem dritten Material, die allgemein parallel zu der kritischen Oberfläche liegen, jeweils für sich genommen im wesentlichen einheitlich dick sind.

13. Verfahren nach einem der vorhergehenden Ansprüche, wobei zumindest die Mehrzahl der Schichten aus dem ersten, dem zweiten und, falls vorhanden, dem dritten Material, die allgemein parallel zu der kritischen Oberfläche liegen, ein Verhältnis von Grenzfläche zu Einheitsdicke von mindestens 100:1 aufweist.

14. Verfahren nach Anspruch 12, wobei zumindest das erste, das zweiten und, falls vorhanden, das dritte Material, die allgemein parallel zu der kritischen Oberfläche liegen, ein Verhältnis von Grenzfläche zu Einheitsdicke von mindestens 1.000:1 aufweisen.

15. Verfahren nach einem der vorhergehenden Ansprüche, wobei die gewünschte Konfiguration eine einheitliche Zusammensetzung zumindest in bezug auf das erste, das zweite und, falls vorhanden, das dritte Material aufweist, die der kritischen Oberfläche benachbart sind.

**16.** Verfahren nach einem der vorhergehenden Ansprüche, wobei die Schichten aus dem ersten, dem zweiten und, falls vorhanden, dem dritten Material, die allgemein parallel zu der kritischen Oberfläche liegen, gleichmäßig über einen dieser Oberfläche benachbarten Querschnitt durch den Gegenstand verteilt sind.

**17.** Verfahren nach einem der vorhergehenden Ansprüche, wobei die Koextrusion mit Unterbrechungen durchgeführt wird.

**18.** Verfahren nach Anspruch 17, wobei die Koextrusion mittels eines Schneckenkolbeneinspritzverfahrens durchgeführt wird.

**19.** Asymmetrischer formbarer Gegenstand aus Kunststoff mit mehreren Schichten, der nach einem Verfahren nach einem der vorhergehenden Ansprüche hergestellt wurde und mindestens 17 diskrete Schichten aus mehreren verschiedenen thermoplastischen harzartigen Materialien enthält, die sich kontinuierlich durch den Gegenstand erstrecken.

**Revendications**

**1.** Procédé pour fabriquer un article en matière plastique multicouche en couches essentiellement continues moulables, comprenant les étapes consistant:

- à co-extruder un courant composite composé de couches généralement parallèles et planes, séparées d'au moins une première et une deuxième matière, thermoplastiques différentes; et
- à former le courant composite dans une configuration souhaitée par un procédé autre que le thermoformage, ladite configuration souhaitée ayant au moins une surface critique de sorte qu'une pluralité de couches séparées et essentiellement continues des première et deuxième matières s'étende de façon générale parallèlement à une telle surface et dans laquelle les épaisseurs de la couche des première et deuxième matières dans le courant composite sont choisies de sorte que la configuration souhaitée possède une uniformité importante de composition, formant ainsi un article en matière plastique multicouche en couches essentiellement continues.

**2.** Procédé selon revendication 1 précédentes, comprenant l'étape consistant à manipuler le courant composite pour former un nombre accru de couches généralement planes et parallèles, séparées des première et deuxième matières avant leur formage.

**3.** Procédé selon la revendication 2, dans lequel l'étape consistant à manipuler le courant composite comprend:

- la division du courant composite pour former une pluralité de sous-courants contenant dans leur ensemble un nombre accru de couches généralement planes, séparées des première et deuxième matières par rapport au courant composite avant ladite division; et
- l'empilage de l'ensemble des sous-courants.

**4.** Procédé selon la revendication 3, dans lequel les étapes de division et d'empilage sont accomplies en faisant passer le courant composite à travers un ou plusieurs générateurs de surfaces interfaciales.

**5.** Procédé selon l'une des revendications précédentes, dans lequel dans l'étape de co-extrusion, au moins les première, deuxième et troisième matières thermoplastiques différentes sont co-extrudées dans un ordre de couche choisi, l'ordre de couche choisi étant caractérisé par la disposition d'une couche de la troisième matière entre toute autre matière située au voisinage des première et deuxième matières.

**6.** Procédé selon l'une des revendications précédentes, dans lequel le courant composite est mis sous forme d'une configuration souhaitée par moulage par injection, par moulage par transfert, par moulage par compression, par moulage par injection-soufflage, par moulage par extrusion-soufflage, ou par moulage par déplacement-soufflage.

**7.** Procédé selon l'une des revendications précédentes, dans lequel le courant composite est injecté dans une pluralité de cavités du moule en faisant partie d'un procédé de moulage par injection multicavité.

**8.** Procédé selon la revendication 7, dans lequel les cavités du moule possèdent des géométries différentes.

9. Procédé selon l'une des revendications 7 ou 8, dans lequel au moins une des première et deuxième matières comprend moins de 15 pour-cent en volume du courant injecté.

10. Procédé selon revendication 9, dans lequel les couches d'au moins une matière s'étendent entièrement à travers la pluralité de cavités du moule et les articles multicouches produits à partir de celui-ci.

11. Procédé selon l'une des revendications précédentes, dans lequel pas plus de 10 pour-cent des couches des première, deuxième et, si présente, troisième matières situées au voisinage de la surface critique possèdent un rapport entre la surface interfaciale et l'épaisseur unitaire de moins de 10 à 1.

12. Procédé selon l'une des revendications précédentes, dans lequel au moins la pluralité des couches des première, deuxième et, si présente, troisième matières s'étendent de façon générale parallèlement à la surface critique possède individuellement une épaisseur essentiellement uniforme.

13. Procédé selon l'une des revendications précédentes, dans lequel au moins la pluralité des couches des première, deuxième et, si présente, troisième matières s'étendant en général parallèlement à la surface critique possède des rapports entre la surface interfaciale et l'épaisseur unitaire d'au moins 100 à 1.

14. Procédé selon la revendication 12, dans lequel au moins les première, deuxième et, si présente, troisième matières s'étendant en général parallèlement à la surface critique possèdent des rapports entre la surface interfaciale et l'épaisseur unitaire d'au moins 1 000 à 1.

15. Procédé selon l'une des revendications précédentes, dans lequel la configuration souhaitée possède une uniformité de composition en ce qui concerne au moins les première, deuxième et, si présente, troisième matières situées au voisinage de la surface critique.

16. Procédé selon l'une des revendications précédentes, dans lequel les couches des première, deuxième et, si présente, troisième matières s'étendant de façon générale parallèlement à la surface critique sont distribuées de façon régulière à travers une coupe transversale de l'article au voisinage de cette surface.

17. Procédé selon l'une des revendications précédentes, dans lequel la co-extrusion est effectuée par intermittence.

18. Procédé selon la revendication 17, dans lequel la co-extrusion est effectuée par un procédé par injection par vis à rotation alternative.

19. Article en matière plastique multicouche moulable asymétrique produit par un procédé selon l'une des revendications précédentes, et comprenant au moins 17 couches séparées d'une pluralité de matières résineuses thermoplastiques différentes s'étendant en continu dans tout l'article.

# FIG. 1

```
   12                    14                    16
┌──────────┐      ┌──────────┐      ┌──────────┐
│ EXTRUDER │      │ EXTRUDER │      │ EXTRUDER │
└──────────┘      └──────────┘      └──────────┘
```

┌─────────────────────────────────┐
│   LAYER   GENERATION            │
18 │   AND  ARRANGEMENT              │
└─────────────────────────────────┘
                                          ← 10

┌─────────────────────────────────┐
│   LAYER MULTIPLICATION           │
└─────────────────────────────────┘

┌─────────────────────────────────┐
│   SYMMETRICIZER                  │
└─────────────────────────────────┘

┌─────────────────────────────────┐
│   INJECTION MOLDING              │
└─────────────────────────────────┘

# FIG. 2

FIG. 3

FIG. 4A

FIG. 4B

FIG. 4C

FIG. 4D

FIG. 4E

FIG. 4F

EP 0 506 872 B1

# FIG. 5A

*48b*

*48a*

*46*

*50*

*46*

# FIG. 5B

*46*

# FIG. 5C

*48*

*48a*

*48b*

28

## FIG. 6A

## FIG. 6B

## FIG. 10A

FIG. 7A

FIG. 7B

FIG. 8

FIG.9C

FIG.9D

FIG.9E

FIG.9B

FIG.9H

FIG.9A

FIG.9F

FIG.9G

# FIG. IOB

# FIG. IOC

FIG. IIB

FIG. IIA